# FASCICULE DE BREVET EUROPEEN

(11) **EP 3 630 699 B1**
(45) Date de publication et mention de la délivrance du brevet: **16.08.2023**
(21) Numéro de dépôt: 17737857.7
(22) Date de dépôt: 02.06.2017
(51) Int. Cl.: C04B 28/06, B28C 5/02, B28C 5/06, C04B 111/00

(54) **ENDUIT INTERIEUR EN PATE ET PROCEDE D'APPLICATION**
PASTÖSER PUTZ FÜR INNENRAUM UND VERFAHREN ZUM AUFTRAGEN
INTERIOR RENDER PASTE AND METHOD OF APPLICATION

(43) Date de publication de la demande: 08.04.2020
(73) Titulaire: International Coating Products, 01150 Lagnieu (FR)
(72) Inventeur: BERGLIND, Staffan, 69270 Fontaines Sur Saone (FR); MARATRAT, Audrey, 38390 Parmilieu (FR); JEANNETTE, Thierry, 92370 Chaville (FR)
(74) Mandataire: Plasseraud IP
(86) Numéro de dépôt international: PCT/FR2017/051402
(87) Numéro de publication internationale: WO 2018/220287

(56) Documents cités:
- EP-A1- 2 431 341
- EP-A1- 2 607 330
- EP-B1- 2 607 330
- WO-A1-2011/083174
- WO-A2-2014/009298
- FR-A1- 2 918 055
- FR-A1- 3 014 430
- FR-A3- 2 763 937
- US-A- 4 088 804
- US-A- 4 455 171
- US-A- 4 814 201
- US-A- 4 934 596
- M. Thewes ET AL: "Mörtel im Tunnelbau Stand der Technik und aktuelle Entwicklungen zur Verfüllung des Ringspaltes bei Tunnelvortriebsmaschinen", BauPortal 12/2009, 31 décembre 2009 (2009-12-31), pages 706-711, XP055198529, Extrait de l'Internet: URL:www.baumaschine.de/tunnelbau [extrait le 2015-06-26]

## Description

### Domaine technique

Le domaine technique de l'invention est celui des enduits intérieurs en pâte pour le bâtiment.

Plus précisément, la présente invention concerne un enduit intérieur en pâte, comprenant un système bicomposant à mélanger au moment de son utilisation, à base de liant organique et d'aluminate de calcium. Elle vise également le procédé d'application dudit enduit.

### Arrière-plan technologique

Les enduits intérieurs pour le bâtiment couvrent les domaines d'emploi suivants :
- enduits de peinture pour la préparation des supports (selon NF P 30-608 et EN16566),
- enduits de jointoiement des plaques de plâtre (selon EN 13963),
- enduits de maçonnerie pour l'intérieur (EN 15824).

Traditionnellement, les enduits intérieurs existent sous forme de poudre, principalement à base de liant minéral et/ou hydraulique, et sous forme de pâte prête à l'emploi (principalement à base de liant organique). Chacune de ces deux formes présente des avantages et des inconvénients pour l'utilisateur.

D'un côté, les produits sous forme de poudre sont stockés à l'état pulvérulent dans des sacs, avant d'être mélangés avec de l'eau lors de la mise en oeuvre sur chantiers. Les enduits en poudre peuvent être appliqués en forte épaisseur sans couler et leur temps d'attente entre deux couches ("temps de redoublement") et de séchage sont relativement courts. Par contre, leur manipulation nécessite de disposer d'outils de gâchage, et de respecter scrupuleusement les rapports déterminés de poudre et d'eau, sous peine d'obtenir un produit ne présentant pas les propriétés souhaitées pour l'application sur le support. Or, le respect des rapports de gâchage poudre/eau n'est pas des plus faciles sur les chantiers. L'utilisation de ces produits en poudre présente également l'inconvénient de produire d'importantes émissions de poussières qui peuvent être particulièrement gênantes pour l'utilisateur.

D'un autre côté, les produits sous forme de pâte à base de liant organique, malgré leur praticité du fait de leur caractère « prêt à l'emploi », présentent un certain nombre de désavantages par rapport aux enduits en poudre à base de plâtre ou par rapport à des mortiers à base de ciment, qui limitent leur usage, à savoir :
- temps de séchage : dans des conditions d'application défavorables (froid, humidité, manque de ventilation) le séchage par voie d'évaporation est plus long que le séchage par hydratation (prise) des produits à liant minéral.
- sensibilité à l'eau : si un enduit à base uniquement de liants polymères à faible dose (en général 1,5% à 3% en équivalent extrait sec pour un enduit standard) est détrempé après séchage par un apport d'eau, l'enduit est fragilisé et des problèmes d'adhérence et/ou de décollage peuvent se produire.
- retrait au séchage : pour des rebouchages d'épaisseur importante, le retrait des enduits en pâte est trop fort (en général 10 à 20% en volume) limitant leur utilisation pratique à des épaisseurs de moins de 5mm par couche pour les meilleurs, et en pratique à moins de 2 mm. De plus, pour des épaisseurs aussi importantes, le temps de séchage est très long, alors qu'un enduit à base de plâtre permet de réduire le retrait à en général moins de 3% pour des épaisseurs allant jusqu'à 25 mm.

Pour tenter de pallier ces inconvénients, il a été développé des enduits comprenant des systèmes bicomposants. Dans ce cas, le mélange des deux composants initiant la réaction de durcissement de la pâte, est réalisé juste avant la mise en oeuvre sur le support, permettant ainsi de diminuer le temps de séchage, même dans des conditions climatiques défavorables. Un autre avantage de ce type de système est de pouvoir combiner les avantages des deux types de liant minéral et organique afin d'obtenir un enduit aux performances améliorées.

La demande EP0496682A1 décrit un enduit pour le remplissage de joints entre deux plaques de plâtre, se présentant sous la forme de deux composants conservés séparément, le premier composant contenant du plâtre à l'état pulvérulent, et un second composant liquide ou pâteux constitué d'un polymère de type copolymère d'acétate de vinyle et d'éthylène en milieu aqueux jouant le rôle de liant principal du joint. Cet enduit présente avantageusement une teneur en plâtre relativement faible inférieure à 30%, ainsi qu'une bonne résistante mécanique pour assurer la pérennité et la tenue au choc, ainsi qu'une cinétique de durcissement rapide. Il présente l'inconvénient d'exiger de l'utilisateur une manipulation de produit pulvérulent.

La demande de certificat d'utilité FR2763937 décrit un système bicomposant à base de ciment alumineux pour le bâtiment, applicable au domaine de la chimie du bâtiment, et en particulier au collage ou au scellement des matériaux. Le composé A se présente sous forme de pâte aqueuse et est constitué d'une résine polymère et d'un ciment alumineux en suspension dans l'eau, dont l'hydratation est momentanément stoppée par un retardateur à base d'acide borique, ainsi que d'un dispersant organique, d'un agent épaississant et de charges minérales. Le composé B destiné à initier le durcissement du ciment se présente également sous la forme d'une pâte aqueuse, et est composé d'un mélange de chaux hydratée et d'un sel de sodium. Lorsque le composé A et le composé B sont mélangés, le pH du mélange augmente rapidement, ce qui initie le durcissement. Les proportions entre composé A et composé B sont déterminées par le délai souhaité entre malaxage et début du durcissement.

Les brevets EP0241230 et EP0113593 décrivent également des systèmes bicomposants comprenant d'un côté un constituant de base comprenant du ciment et un retardateur, et d'un autre côté un catalyseur constitué de chaux et de sel de lithium, permettant d'obtenir des temps de prise inférieurs à 5 minutes et une résistance mécanique élevée.

La demande EP 2 607 330 divulgue un enduit intérieur en pâte comprenant un système bicomposant comprenant un composant A et un composant B, dans lequel :
Le composant A comporte :
   - un liant organique ; p.e. une dispersion de styroacrylate,
   - un liant minéral étant un ciment sulfo-alumineux calcique,
   - un bloqueur de prise étant l'acide borique,
   - des charges minérales, p.e. le carbonate de calcium, le quartz,
   - un additif rhéologique, p.e. un épaississant,
   - de l'eau ;
Le composant B comorte :
   - un régulateur/accélérateur de prise ; constitué par de l'hydroxyde de lithium ;
   - de l'eau.

Cependant, les systèmes bicomposants évoqués ci-dessus sont perfectibles, du fait de la toxicité de certains de leurs composants vis-à-vis de l'environnement, et de leur corrosivité qui confère un caractère dangereux à leur manipulation.

Il existe donc un réel besoin pour les utilisateurs de disposer d'un enduit intérieur en pâte présentant les avantages d'un système bi-composant, notamment au niveau de la stabilité au stockage, une facilité d'application, et des propriétés mécaniques améliorées après application et durcissement, tout en étant non toxique et/ou non corrosif pour l'environnement et/ou l'utilisateur.

### Problème technique - Objectifs de l'invention

Dans ce contexte, le problème technique à la source de la présente invention est de satisfaire à au moins l'un des objectifs suivants :
- fournir un système bicomposant se présentant sous la forme d'un enduit en pâte prête à l'emploi stable au stockage,
- fournir un enduit en pâte applicable sans manipulation de substances corrosives et/ou irritantes pour l'utilisateur,
- fournir un enduit en pâte dont l'application est peu dépendante des conditions de travail extérieures (température, hygrométrie et ventilation des chantiers),
- fournir un enduit en pâte avec possibilité de calibrer un temps de prise approprié,
- fournir un enduit de maçonnerie utilisable en plein ou sur les points singuliers permettant d'atteindre une étanchéité à l'air conforme aux normes les plus strictes (RT2012),
- proposer un enduit utilisable comme enduit de rebouchage de forte épaisseur, ou de ragréage, par exemple de murs ou plafonds en béton, qui une fois appliqué présente un retrait au séchage réduit.

### Brève description de l'invention

Tout ou partie des objectif susvisés est atteint par la présente invention qui concerne, selon le premier de ses aspects, un enduit intérieur en pâte comprenant un système au moins bicomposant comprenant un composant A et un composant B, dans lequel :
A - le composant A comporte :
   a.1. un liant organique;
   a.2. un liant minéral comprenant un ciment alumineux et/ou un ciment sulfo-alumineux calcique;
   a.3. un bloqueur de prise choisi dans le groupe comprenant- ou mieux encore constitué par-: l'acide borique, l'acide tartrique, l'acide citrique, les sels et/ou les dérivés de ces derniers, l'acide métaphosphorique, l'acide phosphoreux, l'acide phosphorique, l'acide phosphonique et tous composés susceptibles de former l'un quelconque de ces composés par réaction avec l'eau, et/ou leurs mélanges;
   a.4. des charges minérales choisies dans le groupe comprenant- ou mieux encore constitué par-:
      - les charges non allégeantes, de préférence sélectionnées dans le sous-groupe comprenant- ou mieux encore constitué par-: le carbonate de calcium, le quartz, les silicates, le dioxyde de titane, la dolomie, et leurs mélanges;
      - les charges allégeantes, de préférence sélectionnées dans le sous-groupe comprenant- ou mieux encore constitué par-: les cénosphères de silicates d'aluminium, les perlites expansées hydrofugées, les billes de verre, et leurs mélanges;
      et leurs mélanges;
   a.5. un additif rhéologique comprenant au moins un composé choisi parmi au moins l'une des familles suivantes : les argiles, les éthers cellulosiques, les épaississants synthétiques, les xanthanes, les fibres de cellulose, les dérivés d'amidon modifié, et l'alcool polyvinylique;
   a.6. éventuellement un additif non rhéologique comprenant au moins un composé choisi parmi au moins l'une des familles suivantes : les biocides, les anti-mousses, les anti-flashs-rusts, les dispersants, et les cires;
   a.7. éventuellement un régulateur de pH choisi parmi les produits acidifiants, de préférence dans le groupe comprenant -ou mieux encore constitué par- : le sulfate d'aluminium, l'acide citrique, l'acide tartrique et leurs mélanges ; le sulfate d'aluminium étant préféré ou choisi parmi les produits alcalinisants, de préférence dans le groupe comprenant - préférablement constitué par - les bases azotées, les phosphates, les pyrophosphates et leurs mélanges ; de préférence le sous-groupe comprenant - préférablement constitué par - les bases aminées, les pyrophosphates et leur mélange ; et, plus préférablement encore, parmi les bases aminées et leurs mélanges ; le 2-amino-2-méthyl-1-propanol (AMP) étant privilégié;
      la concentration de a.7 dans A, dans le cas où a.7 est présent dans A, étant telles que le pH de la partie A est inférieur au seuil de prise de la partie A ;
   a.8. et de l'eau;
B - le composant B (activateur) comporte:
   b.1. une base
      - identique à ou différente de l'éventuel régulateur de pH a.7 ;
      - et choisie dans le groupe comprenant - préférablement constitué par - les bases azotées, les phosphates, les pyrophosphates et leurs mélanges; de préférence dans le sous-groupe comprenant - préférablement constitué par - les bases aminées, les pyrophosphates et leurs mélanges; et, plus préférablement encore, parmi les bases aminées et leurs mélanges; le 2-amino-2-méthyl-1-propanol (AMP) étant privilégié ;
      cette base b.1 étant présente dans la partie B à une concentration permettant d'atteindre une valeur de pH final supérieure ou égale au seuil de prise du composant A ;
   b.2. éventuellement un régulateur/accélérateur de prise choisi dans le groupe comprenant des composés alcalins et/ou alcalino-terreux tels que des oxydes, des hydroxydes, des carbonates, des sulfates et leurs mélanges, ou mieux encore constitué par de l'hydroxyde de lithium, du carbonate de lithium et/ou du sulfate de lithium;
      la base b.1, éventuellement combinée au régulateur/accélérateur de prise b.2, dans le cas où b.2 est présent, étant apte à amener le pH du mélange AB à une valeur V, qui soit supérieure ou égale à 9, de préférence supérieure ou égale à 10;
   b.3. de l'eau, et ;
   b.4. éventuellement, un agent épaississant.

La prise de l'enduit selon l'invention est déclenchée par mélange du composant A avec le composant B, ce qui provoque l'augmentation du pH du milieu, rendant ainsi inopérant le bloqueur de prise.

Il est du mérite des inventeurs d'être parvenus à formuler cet enduit en utilisant un composant B qui soit :
- non irritant
- apte à être incorporé sous forme liquide ou pâteuse et mélangée à une pâte comprenant un liant organique et un liant minéral, sans nuire à la thixotropie de l'enduit final après mélange de A et B de sorte qu'aucune coulure n'est formée après application sur le support,
- apte à amener le pH final à une valeur supérieure ou égale au seuil de prise du composant A.

L'enduit selon l'invention est doté de bonnes performances de mise en oeuvre telles que le retrait au séchage, adhérence/cohésion, et moindre sensibilité au détrempage. La pâte obtenue à la fin du mélange du composant A avec le composant B présente également une consistance d'emploi adaptée, est homogène, et possède une viscosité telle que son application est facile, notamment par projection.

Les composants liants minéral a.2 et retardateur de prise a.3 peuvent être introduits dans le mélange soit sous forme d'un mélange préétabli en suspension aqueuse (« slurry »), soit directement et indépendamment l'un de l'autre. L'ordre d'introduction des différents composants doit être tel qu'il permet l'obtention d'un composant A stable dans lequel la prise du liant est bloquée.

Selon un deuxième de ses aspects, l'invention vise également un procédé d'application sur un support, de préférence une surface intérieure de bâtiment de l'enduit selon l'invention comprenant les étapes de :
i- mélange du composant A avec le composant B, avantageusement, dans les proportions suivantes: de 99 à 95 % en poids de composant A de viscosité V^{A} comprise entre 200 et 700 Pa.s, pour 1 à 5 % en poids de composant B, de viscosité V^{B} comprise entre 10 et 4000 mPa.s;
ii- application de l'enduit obtenu de préférence par projection/pulvérisation et/ou talochage.

Selon un troisième de ses aspects, la présente invention concerne un dispositif de mélange/projection pour la mise en oeuvre du procédé selon l'invention comprenant :
- une source d'approvisionnement en composant A ;
- une source d'approvisionnement en composant B ;
- une lance de projection munie d'une tête de projection, comprenant une chambre de mélange du composant A et du composant B, et reliée à la source d'approvisionnement en composant A et à la source d'approvisionnement en composant B ;
- des moyens d'acheminement du composant A, de sa source d'approvisionnement jusqu'à la lance de projection ;
- des moyens d'acheminement du composant B, de sa source d'approvisionnement jusqu'à la lance de projection ;
- éventuellement des moyens de projection du mélange composant A - composant B, hors de la tête de projection ;
- et éventuellement un dispositif de pilotage permettant de maîtriser le rapport de mélange composant A - composant B.

### Définitions

Dans tout le présent exposé, tout singulier désigne indifféremment un singulier ou un pluriel.

Les définitions données ci-après à titre d'exemples, peuvent servir à l'interprétation du présent exposé.

Par « *enduit en pâte»,* on entend qu'il s'agit e.g. d'un enduit dont la rhéologie est adaptée à une application sur un support par talochage ou projection. Par exemple, l'enduit peut présenter une consistance d'emploi de calibre 9-14 mesurée au Consistor Baronnie, selon la norme EN14496.

Le terme "additif rhéologique" se rapporte notamment à tout additif ayant un impact sur le comportement rhéologique de la composition, notamment sa viscosité et sa consistance.

La "viscosité V^{A} est une viscosité Brookfield, mesurée à 20°C, avec un mobile helipath E à 10 tours/min.

La "viscosité V^{B} est une viscosité Brookfield, mesurée à 20°C, avec mobile rv. 7 à 20 tours/min.

Sauf indication contraire, les % donnés dans le présent exposé sont des pourcentages en masse.

### Description détaillée de l'invention

### Caractéristiques qualitatives et quantitatives de la composition d'enduit

Selon un mode de réalisation préféré de l'invention, le système bicomposant se caractérise par le fait que ni le composant A ni le composant B, ne sont considérés comme corrosifs et/ou irritants selon le système de classification des produits chimiques en vigueur, et en particulier, aucun des composants A et B n'est étiquetable SGH05 corrosif, ni, de préférence, SGH07 irritant conformément au système général harmonisé de classification et d'étiquetage des produits chimiques (abrégé « système général harmonisé », SGH ; en anglais: *Globally Harmonised System of Classification and Labelling of Chemicals, GHS).*

En effet, l'un des buts de l'invention, comme précédemment évoqué, est de fournir un enduit intérieur bicomposant dont la manipulation puisse se faire sans risque pour le manipulateur, afin d'en améliorer la praticité et le confort d'utilisation, notamment en permettant une application par pulvérisation.

Avantageusement, le rapport massique sur sec [(a.1): (a.2)] varie de [1:3] à [1:0,5] et le pourcentage massique sur sec de (a.2) par rapport au mélange total est inférieur ou égal à 6%.

La variation du rapport liant minéral sur liant organique permet de faire varier notamment l'adhérence de l'enduit final, et d'autres propriétés mécaniques et/ou physiques.

Selon un mode de réalisation préféré, l'enduit présente la composition suivante, en pourcentage massique, dans l'ordre croissant de préférence pour chaque constituant :
Pour le composant A :

| | | |
|---|---|---|
| a.1. | liant organique sec | [0,5-20,0] ; [1,0-10,0] |
| a.2. | liant minéral sec | [0,5-20,0] ; [1,0-10,0] |
| a.3. | bloqueur de prise | [0,001 - 1] ;[0,01 - 0,5] |
| a.4. | charges minérales | [40,0-80,0] ;[55,0-66,0] |
| a.5. | additif rhéologique | [0,5-7,0]; [1,0-3] |
| a.6. | additif non rhéologique | [0,4-3,0] ; [2,0-3,0] |
| a.7. | régulateur de pH | [0,01-0,3] ; [0,01-0,05] |
| a.8. | eau | [20-50] ; [20-25] |

Pour le composant B :

| | | |
|---|---|---|
| b.1. | base | [5,0-20,0] ; [8,0-12,0] |
| b.2. | régulateur/accélérateur de prise | [5,0-25]; [18-22] |
| b.3. | eau | [60-80] ; [65-75] |
| b.4. | épaississant | [0,2-1,0]; [0,3-0,6] |

Le système bicomposant selon l'invention contient un certain nombre d'ingrédients dont le rôle et la définition sont donnés ci-dessous.

### ✔ Liant organique a. 1

Avantageusement, le liant organique a.1 est choisi dans le groupe comprenant- ou mieux encore constitué par-: les copolymères d'acétate de vinyle/éthylène, de vinylester d'acide versatique, ou de styrène/acrylique/acrylique, les résines alkydes, et/ou leurs mélanges, de préférence sous forme d'émulsion.

Les produits commerciaux Mowilith^{®} LDM 2110 de la société Celanese Emulsion Polymers ou UCCAR^{®} DL 420 G de la société DOW CHEMICALS sont des exemples de liants organiques a.1.

### ✔ Liant minéral a.2

Le liant minéral a.2 est choisi dans le groupe comprenant- ou mieux encore constitué par-: les ciments alumineux et/ou les ciments sulfo-alumineux calciques.

### ✔ Bloqueur de prise a.3

Le rôle du bloqueur de prise est d'empêcher la prise du liant minéral dans le composant A, par maintien d'un pH acide.

Avantageusement, le bloqueur de prise a.3 est choisi dans le groupe comprenant- ou mieux encore constitué par-: l'acide borique, l'acide tartrique, l'acide citrique, les sels et/ou les dérivés de ces derniers, l'acide métaphosphorique, l'acide phosphoreux, l'acide phosphorique, l'acide phosphorique et tous composés susceptibles de former l'un quelconque de ces composés par réaction avec l'eau, et/ou leurs mélanges.

Ces bloqueurs de prise ont des mécanismes d'action différents, en limitant la solubilisation du liant minéral dans l'eau, ou en retardant la précipitation massive des hydrates correspondant à la prise. Leur combinaison éventuelle permet, en combinant leurs mécanismes d'action complémentaires, d'obtenir un composant A stable dans le temps.

### ✔ Charges minérales a.4

Avantageusement, les charges minérales a.4 sont choisies dans le groupe comprenant- ou mieux encore constitué par-:
- les charges non allégeantes, de préférence sélectionnées dans le sous-groupe comprenant- ou mieux encore constitué par-: le carbonate de calcium, le quartz, les silicates, le dioxyde de titane, la dolomie, et leurs mélanges;
- les charges allégeantes, de préférence sélectionnées dans le sous-groupe comprenant- ou mieux encore constitué par-: les cénosphères de silicates d'aluminium, les perlites expansées hydrofugées, les billes de verre type PORAVER^{®} et leurs mélanges;
- et leurs mélanges.

### ✔ Additif rhéologique a. 5

Avantageusement, l'additif rhéologique comprend au moins un composé choisi parmi au moins l'une des familles suivantes : les argiles, par exemple, les bentones, les smectites, les atapulgites (terre à Foulon ou smectites), les éthers cellulosiques, les épaississants synthétiques (acryliques, polyuréthane), les xanthanes, les fibres de cellulose, les dérivés d'amidon modifié, et l'alcool polyvinylique.

### ✔ Additif non rhéologique a.6

Selon un mode de réalisation préféré, l'additif non rhéologique comprend au moins un composé choisi parmi au moins l'une des familles suivantes : les biocides, les anti-mousses, les anti-flashs-rusts, les dispersants, et les cires.

### ✔ Régulateur de pH a.7

Le régulateur de pH a.7 est facultatif. Il a pour fonction d'ajuster le pH lors du procédé de fabrication du composant A de l'enduit selon l'invention. Cet ajustement du pH peut se faire à la baisse ou à la haussepour arriver à un pH aux alentours de 7-8, de manière que les épaississants utilisés permettent d'obtenir une pâte stable satisfaisant aux caractéristiques rhéologiques recherchées, en termes de thixotropie, de viscosité, de comportement mécanique sous cisaillement, etc.

Dans le cas d'un ajustement du pH à la baisse, ce régulateur a.7 est choisi parmi les produits acidifiants, de préférence dans le groupe comprenant -ou mieux encore constitué par- : le sulfate d'aluminium, l'acide citrique, l'acide tartrique et leurs mélanges; le sulfate d'aluminium étant préféré.

Dans le cas d'un ajustement du pH à la hausse, ce régulateur a.7 est choisi parmi les produits alcalinisants, de préférence dans le groupe comprenant - préférablement constitué par - les bases azotées, les phosphates, les pyrophosphates et leurs mélanges; de préférence dans le sous-groupe comprenant - préférablement constitué par - les bases aminées, les pyrophosphates et leurs mélanges; et, plus préférablement encore, parmi les bases aminées et leurs mélanges; le 2-amino-2-méthyl-1-propanol (AMP) étant privilégié.

Les phosphates et les pyrophosphates peuvent être *e.g.* des sels de Na, Fe, Ca, Zn ou K.

### ✔ Base b.1

La fonction de la base b. 1 dans le composant B est d'augmenter le pH du composant A à une valeur qui soit supérieure ou égale à 9, de préférence supérieure ou égale à 10.

La base b. 1 est choisi de préférence dans le groupe comprenant - préférablement constitué par - les bases azotées, les phosphates, les pyrophosphates et leurs mélanges.

Les phosphates et les pyrophosphates peuvent être *e.g.* des sels de Na, Fe, Ca, Zn ou K.

De préférence, la base b. 1 est sélectionnée dans le sous-groupe comprenant - préférablement constitué par - les bases aminées, les pyrophosphates et leurs mélanges; et, plus préférablement encore, parmi les bases aminées et leurs mélanges; le 2-amino-2-méthyl-1-propanol (AMP) étant privilégié.

Ces bases azotées, avantageusement non corrosives, (selon le système de classification des produits chimiques en vigueur), sont par exemple sélectionnées dans le groupe comprenant - ou mieux encore constitué par- : Tris(hydroxymethyl) Aminométhane, le 2-Amino-2-Ethyl-1,3-Propane-Diol, le N-Butyldiéthanolamine, le 2-amino-2-méthyl-1-propanol (AMP), et leurs mélanges.

La base utilisée selon le mode de réalisation préféré de l'invention est le 2-amino-2-méthyl-1-propanol (AMP). En utilisant une dilution suffisante de l'AMP dans l'eau (par exemple, dilution de 2-amino-2-méthyl-1-propanol à 10% dans l'eau (par exemple celle commercialisée sous la dénomination AMP90^{®} par la société ANGUS^{®} CHEMIE), la substance est considérée comme non irritante, contrairement aux autres bases couramment utilisées telles que la soude, l'hydroxyde de potassium, ou la chaux éteinte Ca(OH)₂, qui sont irritantes, et ce même à des concentrations très faibles. Ainsi, la mise en oeuvre des produits selon l'invention et leur manipulation sur chantier reste une opération sans risque particulier, et permet notamment une application du produit par projection.

Un autre avantage est que seul un faible volume est nécessaire pour augmenter le pH suffisamment pour enclencher la prise de l'enduit. Ainsi, l'ajout de l'additif en quantité faible permet une incorporation sans chute de viscosité de l'enduit, au-delà des limites lui permettant de garder des propriétés rhéologiques requises une fois projeté sur les murs : l'enduit ne doit pas couler et doit pouvoir être lissé avec facilité.

Il importe par ailleurs que la viscosité de l'enduit à projeter, ne soit pas trop élevée pour permettre l'utilisation de dispositifs de projection standards.

### Caractéristiques applicatives de l'enduit

Selon un mode de réalisation préféré, l'enduit est choisi dans le groupe comprenant : les enduits de peinture pour la préparation de supports, les enduits de jointoiement de plaques de plâtre, ou les enduits de maçonnerie/ragréage pour l'intérieur.

La présente invention a pour but de fournir un enduit de peinture pour la préparation des supports (selon NF P 30-608 et EN 16566), notamment des enduits de rebouchage de forte épaisseur, ou de ragréage, par exemple de murs ou plafonds en béton

La présente invention a également pour but de fournir un enduit pour le jointoiement des plaques de plâtre (selon la norme EN 13963). L'avantage de l'invention consiste en la possibilité de moduler le temps de prise/séchage/recouvrabilité par ajustement de la quantité de sulfate de lithium. Cette possibilité est particulièrement intéressante en hiver où l'usage d'enduit à joint en pâte ne se fait pas en pratique toujours dans les conditions optimales (règles de H.R < 65%, bonne ventilation, température supérieure à 5°C), ce qui induit des temps de séchage trop longs et des risques de mauvaise polymérisation. De manière plus générale, c'est un avantage dont on peut tirer parti sur des chantiers de petite envergure où l'organisation ne permet pas forcément d'attendre entre deux couches d'enduit.

Enfin, la présente invention a pour but de fournir des enduits de maçonnerie (en plein ou sur des points singuliers), selon la norme EN15824, pouvant être utilisés comme enduits de ragréage pour corriger les défauts de planéité des bétons (murs, plafonds, joints entre éléments préfabriqués) et / ou avant isolation ou doublage par complexes isolants (polystyrène-plaque de plâtre par exemple) pour assurer une parfaite étanchéité à l'air.

### Procédé et dispositif d'application de l'enduit

Le procédé selon invention passe par le mélange des composants A&B et le dépôt d'une ou plusieurs couches de ce mélange sur un support, par exemple un support présent à l'intérieur ou à l'extérieur, de préférence à l'intérieur de bâtiments tel qu'un mur, un plafond ou toute autre surface à enduire.

L'un des avantages de l'enduit selon l'invention est de permettre la mécanisation de son application sur un support. En particulier, la projection du mélange A&B peut se faire à l'aide d'un dispositif mélange/projection comprenant :
- une source d'approvisionnement en composant A ;
- une source d'approvisionnement en composant B ;
- une source d'air comprimé ;
- une lance de projection composée de l'amont vers l'aval d'un corps de lance et d'une tête de projection, comprenant une chambre de mélange du composant A et du composant B, et reliée à la source d'approvisionnement en composant A et à la source d'approvisionnement en composant B ;
- un conduit reliant la source d'approvisionnement en composé A à l'extrémité amont du corps de lance ;
- un conduit reliant la source d'approvisionnement en composant B à la zone médiane du corps de lance, par l'intermédiaire d'un injecteur ;
- un conduit reliant la source d'air comprimé à la tête de projection, des moyens d'acheminement du composant A, de sa source jusqu'au corps de lance 4 de projection des moyens d'acheminement du composant B, de sa source 1b d'approvisionnement jusqu'au corps de lance 4 de projection;
- et un système de pilotage permettant, d'une part, de maîtriser le rapport de mélange composant A / composant B, de telle façon que la proportion de B soit régulière et constante, avec de préférence une tolérance de +/- 1 % de variation de la proportion de B dans le mélange AB, et, d'autre part, d'obtenir un mélange AB homogène.

Le dispositif est conçu pour donner un rapport de mélange correspondant aux pourcentages recherchés, à savoir, par exemple, de 99 à 96 % en poids de composant A de viscosité V^{A} comprise entre 200 et 700 Pa.s, pour 1 à 5 % en poids de composant B, de viscosité V^{B} comprise entre 10 et 4000 mPa.s.

L'invention sera mieux comprise à la lecture des exemples qui suivent et qui illustrent une formulation préférée de l'enduit selon invention, un mode de préparation de cette formulation, une évaluation des propriétés d'usage de cette formulation d'enduit, ainsi qu'une application de cette formulation d'enduit à l'aide du dispositif décrit ci-dessus.

### Exemples 1 & 2 : enduits bi-composant AB

### ✔ Formulation composant A

| | | | FORMULE Exemple 1 | FORMULE Exemple 2 |
|---|---|---|---|---|
| | | | **% en masse** | **% en masse** |
| a.1 | Copolymère styrène acrylique humide et coalescent (dispersion aqueuse à 49%) : UCAR^{®} Latex DL 420 G de la société Dow Chemicals | | 7,00 | |
| a.1 | Copolymère Vinyl-versatate-Veova humide (dispersions aqueuse à 50%): | | | 6,10 |
| | Mowilith LDM2110 de la société Celanese Emulsion Polymers | | | |
| a.2 | Liant minéral constitué par un slurry d'aluminate de calcium à 60 % dans l'eau | | 7,00 | 6,10 |
| a.3 | Sel d'acide borique | | 0,10 | 0,10 |
| a.4 | Charges minérales CaCO₃ | | 56,00 | 23,00 |
| a.4 | Charges minérales Sable siliceux | | | 43,00 |
| a.4 | Charges minérales allégées constituées par des cénosphères | | 5,00 | |
| a. 5 | Epaississants/additifs rhéologiques : | | 0,70 | 0,60 |
| | | - argiles (attapulgite) | | |
| | | - gomme de xanthane | 0,40 | 0,35 |
| a.6 | Additifs non rhéologiques : | | 1,00 | 0,90 |
| | | - fibres de pulpe de cellulose | | |
| | | - cire synthétique à base de paraffines | 0,50 | 0,40 |
| a.7 | Sulfate d'aluminium | | 0,20 | |
| a.7 | 2-amino-2-méthyl-1-propanol (commercialisé sous la dénomination AMP90^{®} par la société ANGUS^{®} CHEMIE) | | | 0,15 |
| a. 8 | Eau | | 21,52 | 18,80 |
| | Additifs divers : | | 0,30 | 0,26 |
| | - biocides (mélange de 5-chloro-2-méthyl-4-isothiazoline-3-one (CIT) / 2-méthyl-4-isothiazoline-3-one (MIT) et de 2-méthyl-4-isothiazoline-3-one (MIT) / 1,2-benzisothiazoline-3-one (BIT)) | | | |
| | | - antimousse (huile minérale) | 0,10 | 0,09 |
| | | - anti flash-rust | 0,15 | 0,12 |
| | | - dispersant (polyacrylate de sodium) | 0,03 | 0,03 |

### ✔ Formulation composant B

| | | **% en masse** |
|---|---|---|
| b.1 | 2-amino-2-méthyl-1-propanol (commercialisé sous la dénomination AMP90^{®} par la société ANGUS^{®} CHEMIE) | 9,4 |
| b.2 | Accélérateur de prise : Sulfate de lithium | 20,8 |
| b.3 | Eau | 69,2 |
| b.4 | Gomme de xanthane | 0,5 |

### ✔ Ratio composant A/composant B

| | % en poids |
|---|---|
| Composant A | 97 |
| Composant B | 3 |

### Méthode de préparation

Le produit est formulé avec une neutralisation du composant A à un pH d'environ 7,0, suffisamment bas pour assurer une stabilité au stockage mais suffisamment haut pour que les épaississants puissent agir et conférer à l'enduit une viscosité de niveau et de stabilité adéquate.

Le matériel utilisé pour la préparation des composants A & B est constitué par un mélangeur industriel vertical de 3 m³ comportant un axe central portant deux bras racleurs, un 1^{er} axe périphérique muni de deux disques de dispersion et 2^{ème} axe périphérique équipé de pales hélicoïdales ("impeller"). Ce mélangeur est du type de ceux utilisés dans le domaine des peintures et enduits en pâte.

La méthode mise en oeuvre consiste à disperser les charges minérales et assembler l'éventuel slurry de CAC et les différents composants et additifs dans l'eau avec une puissance de cisaillement suffisante pour assurer un mélange homogène exempt de grumeaux et sans endommager les caractéristiques rhéologiques ou d'éventuelles charges fragiles.

La durée de mélange dans ce mélangeur est de 30 minutes au total, dont 5 minutes de grande vitesse avec effet vortex pour la dispersion des charges minérales avec une vitesse périphérique de 14 m/s sur les disques de dispersion. Une vitesse de rotation de 220 tours/minute de l'hélice et des racleurs à contre-sens à 12 tours/minute, permettent une homogénéisation satisfaisante.

L'ajout dans le composant A du composant B, lequel comprend de la solution d'AMP90 à 12% permet d'enclencher une prise de l'enduit dans des conditions de température ambiante d'environ 23°C en l'espace d'environ 10 à 15 heures.

L'enduit selon l'exemple 1 est un enduit mural polyvalent.

L'enduit selon l'exemple 2, doté d'une bonne tenue à l'eau et d'une grande dureté, est destiné typiquement au ragréage. C'est une formulation économique.

### Résultats techniques pour les enduits selon les exemples 1 & 2

### ✔ Retrait au séchage

La mesure du retrait au séchage est réalisée selon le protocole suivant :
- Utiliser un contenant (ex : boite de pétri) de hauteur < 2cm.
- Mesurer la masse d'un sable tamisé à 200 - µm nécessaire pour remplir le contenant et l'araser.
- Remplir le contenant d'enduit et araser.
- Laisser sécher 7 jours.
- Mesurer la masse de sable nécessaire pour combler le retrait de l'enduit dans son contenant en versant le sable sur le contenant puis en l'arasant.

Le rapport de la masse de sable utilisée pour combler le retrait de l'enduit et de la masse de sable utilisée pour remplir le contenant vide donne un pourcentage de rétraction.

Les résultats techniques en termes de retrait au séchage sont spectaculaires, de près de 12 à 18%, on passe à environ 2 à 4 % de retrait en volume par l'apport du liant hydraulique dans un enduit de ce type.

### ✔ Adhérence/cohésion

L'adhérence est réalisée selon la norme NF EN 1542, ou ISO 4624.

Le produit a une adhérence de 0,86 N/mm² sur béton en 1mm épais très satisfaisante, supérieure à la limite fixée à 0,5 N/mm² pour un enduit répondant à la norme EN16566, à 0.3 N/mm² pour un enduit couvert par la norme EN 15824 ou, à titre d'exemple, une limite fixée à 0.1 N/mm² pour les enduits à base plâtre couverts par la norme EN13279.

### ✔ Résistance à l'abrasion humide

La résistance à l'abrasion humide est réalisée selon la norme ISO 11998.

Alors qu'un enduit en pâte dont la formulation est équivalente mais ne contient pas de slurry d'aluminate de calcium ne passe pas les 100 cycles d'abrasion demandés par la norme ISO 11998 (le revêtement est complètement retiré du support après une cinquantaine de cycles), l'enduit à base de slurry permet de passer les 100 cycles du test et de classer l'enduit en catégorie A. On rappelle qu'il existe 4 catégories d'enduits résistant à l'eau : A, B, C et D, A étant la plus résistante, D la moins résistante.

### Exemple 3 : Application de l'enduit selon l'exemple 1.

Une pompe à vis Moineau basse pression (pression de travail nominale 30-40 bars) ou haute pression (pression de travail nominale 80 à 140 bars), ou avec une pompe à piston hydraulique airless de type Speeflo-TYREX (pression de travail nominale 180 à 220 bars), permet l'acheminement du composant A, de sa source, jusqu'au corps de lance.

Le mélange A&B se fait nécessairement dans la tête de projection, afin que la prise du produit ne puisse pas cimenter l'intérieur de la pompe ou des tuyaux si le matériel n'est pas rincé soigneusement après utilisation.

Le composant B est alimenté à partir de sa source d'approvisionnement classique, tel qu'un pot pression traditionnel équipé d'une pompe (maximum 3,5 bars), avec des composants améliorés pour supporter le pH élevé du composant B.

Le dispositif est conçu pour donner un rapport de mélange correspondant aux pourcentages recherchés, à savoir, par exemple, de 97 % en poids de composant A de viscosité V^{A} égale à 300 Pa.s dans l'exemple 1 et de viscosité V^{A} égale à 350 Pa.s dans l'exemple 2, pour 3 % en poids de composant B, de viscosité V^{B} égale à 1600 mPa.s.

## Revendications

1. Enduit intérieur en pâte comprenant un système au moins bicomposant comprenant un composant A et un composant B, dans lequel :
A - le composant A comporte :
a.1. un liant organique;
a.2. un liant minéral comprenant un ciment alumineux et/ou un ciment sulfo-alumineux calcique;
a.3. un bloqueur de prise choisi dans le groupe comprenant- ou mieux encore constitué par-: l'acide borique, l'acide tartrique, l'acide citrique, les sels et/ou les dérivés de ces derniers, l'acide métaphosphorique, l'acide phosphoreux, l'acide phosphorique, l'acide phosphonique et tous composés susceptibles de former l'un quelconque de ces composés par réaction avec l'eau, et/ou leurs mélanges;
a.4. des charges minérales choisies dans le groupe comprenant- ou mieux encore constitué par-:
• les charges non allégeantes, de préférence sélectionnées dans le sous-groupe comprenant- ou mieux encore constitué par-: le carbonate de calcium, le quartz, les silicates, le dioxyde de titane, la dolomie, et leurs mélanges;
• les charges allégeantes, de préférence sélectionnées dans le sous-groupe comprenant- ou mieux encore constitué par-: les cénosphères de silicates d'aluminium, les perlites expansées hydrofugées, les billes de verre, et leurs mélanges;
et leurs mélanges;
a.5. un additif rhéologique comprenant au moins un composé choisi parmi au moins l'une des familles suivantes : les argiles, les éthers cellulosiques, les épaississants synthétiques, les xanthanes, les fibres de cellulose, les dérivés d'amidon modifié, et l'alcool polyvinylique;
a.6. éventuellement un additif non rhéologique comprenant au moins un composé choisi parmi au moins l'une des familles suivantes : les biocides, les anti-mousses, les anti-flashs-rusts, les dispersants, et les cires;
a.7. un régulateur de pH choisi parmi les produits acidifiants, de préférence dans le groupe comprenant -ou mieux encore constitué par- : le sulfate d'aluminium, l'acide citrique, l'acide tartrique et leurs mélanges ; le sulfate d'aluminium étant préféré ou choisi parmi les produits alcalinisants, de préférence dans le groupe comprenant - préférablement constitué par - les bases azotées, les phosphates, les pyrophosphates et leurs mélanges ; de préférence le sous-groupe comprenant - préférablement constitué par - les bases aminées, les pyrophosphates et leur mélange ; et, plus préférablement encore, parmi les bases aminées et leurs mélanges; le 2-amino-2-méthyl-1-propanol (AMP) étant privilégié;
la concentration de a.7 dans A, étant telles que le pH de la partie A est inférieur au seuil de prise de la partie A ;
a.8. et de l'eau ;
B - le composant B comporte :
b.1. une base
· identique à ou différente du régulateur de pH a.7 ;
· et choisie dans le groupe comprenant - préférablement constitué par - les bases azotées, les phosphates, les pyrophosphates et leurs mélanges; de préférence dans le sous-groupe comprenant - préférablement constitué par - les bases aminées, les pyrophosphates et leurs mélanges; et, plus préférablement encore, parmi les bases aminées et leurs mélanges; le 2-amino-2-méthyl-1-propanol (AMP) étant privilégié;
cette base b.1 étant présente dans la partie B à une concentration permettant d'atteindre une valeur de pH final supérieure ou égale au seuil de prise du composant A ;
b.2. un régulateur/accélérateur de prise choisi dans le groupe comprenant des composés alcalins et/ou alcalino-terreux tels que des oxydes, des hydroxydes, des carbonates, des sulfates et leurs mélanges, ou mieux encore constitué par de l'hydroxyde de lithium, du carbonate de lithium et/ou du sulfate de lithium; la base b.1, combinée au régulateur/accélérateur de prise b.2, étant apte à amener le pH du mélange AB à une valeur V, qui soit supérieure ou égale à 9, de préférence supérieure ou égale à 10;
b.3. de l'eau, et ;
b.4. éventuellement, un agent épaississant.

2. Enduit selon la revendication 1, **caractérisé en ce que** ni le composant A, ni le composant B, ne sont étiquetables SGH05 corrosif, ni SGH07 irritants conformément au système général harmonisé de classification et d'étiquetage des produits chimiques (abrégé « système général harmonisé », SGH ; en anglais: *Globally Harmonised System of Classification and Labelling of Chemicals, GHS).*

3. Enduit selon la revendication 1 ou 2, **caractérisé en ce que** le rapport massique sur sec [(a.1): (a.2)] varie de [1:3] à [1:0,5] et **en ce que** le pourcentage massique sur sec de (a.2) par rapport au mélange total est inférieur ou égal à 6%.

4. Enduit selon l'une au moins des revendications précédentes, **caractérisé en ce qu'**il comprend l'additif non rhéologique a.6.

5. Enduit selon l'une des revendications précédentes, **caractérisé en ce qu'**il a la composition suivante, en pourcentage massique :
Pour le composant A :
| | | |
|---|---|---|
| a.1. | liant organique sec | [0,5-20,0] |
| a.2. | liant minéral sec | [0,5-20,0] |
| a.3. | bloqueur de prise | [0,001 - 1] |
| a.4. | charges minérales | [40,0-66,0] |
| a.5. | additif rhéologique | [0,5-7,0] |
| a.6. | additif non rhéologique | [0,4-3,0] |
| a.7. | régulateur de pH | [0,01-0,3] |
| a.8. | eau | [20-50] |
Pour le composant B :
| | | |
|---|---|---|
| b.1. | base | [5,0-20,0] |
| b.2. | régulateur/accélérateur de prise | [5,0-25] |
| b.3. | eau | [60-80] |
| b.4. | épaississant | [0,2-1,0] |

6. Enduit selon l'une au moins des revendications précédentes, **caractérisé en ce que** le liant organique a.1 est choisi dans le groupe comprenant- ou mieux encore constitué par-: des copolymères d'acétate de vinyle/éthylène, de vinylester d'acide versatique, de styrène/acrylique/acrylique, de résines alkydes et/ou leurs mélanges, de préférence sous forme d'émulsion.

7. Enduit selon l'une au moins des revendications précédentes, **caractérisé en ce que** l'enduit est choisi dans le groupe comprenant : les enduits de peinture pour la préparation de supports, les enduits de jointoiement de plaques de plâtre, ou les enduits de maçonnerie/ragréage pour l'intérieur.

8. Procédé d'application sur un support, de préférence une surface intérieure de bâtiment de l'enduit selon l'une au moins des revendications 1 à 7 comprenant les étapes de :
i- mélange du composant A avec le composant B,
ii- application de l'enduit obtenu de préférence par projection/pulvérisation et/ou talochage.

## Patentansprüche

1. Pastenförmiger Innenputz, umfassend ein mindestens zweikomponentiges System, das eine Komponente A und eine Komponente B umfasst, wobei:
A - Komponente A umfasst:
a.1. ein organisches Bindemittel;
a.2. ein mineralisches Bindemittel, das einen Tonerde-Zement und/oder einen Calcium-Aluminium-Sulfo-Zement umfasst;
a.3. einen Abbindeblocker, der ausgewählt ist aus der Gruppe umfassend - oder besser noch bestehend aus - : Borsäure, Weinsäure, Zitronensäure, deren Salze und/oder Derivate, Metaphosphorsäure, phosphorige Säure, Phosphorsäure, Phosphonsäure und alle Verbindungen, die durch Reaktion mit Wasser eine dieser Verbindungen bilden können, und/oder deren Mischungen;
a.4. mineralische Füllstoffe, ausgewählt aus der Gruppe umfassend - oder besser noch bestehend aus - :
• nicht-erleichternde Füllstoffe, vorzugsweise ausgewählt aus der Untergruppe umfassend - oder besser noch bestehend aus - : Calciumcarbonat, Quarz, Silikaten, Titandioxid, Dolomit und deren Mischungen;
• erleichternde Füllstoffe, vorzugsweise ausgewählt aus der Untergruppe umfassend - oder besser noch bestehend aus - : Aluminiumsilikat-Zenosphären, wasserabweisenden expandierten Perliten, Glaskugeln und deren Mischungen;
und deren Mischungen;
a.5. einen rheologischen Zusatzstoff, der mindestens eine Verbindung umfasst, die aus mindestens einer der folgenden Familien ausgewählt ist: Tone, Celluloseether, synthetische Verdickungsmittel, Xanthan, Cellulosefasern, modifizierte Stärkederivate und Polyvinylalkohol;
a.6. gegebenenfalls einen nicht-rheologischen Zusatzstoff, der mindestens eine Verbindung umfasst, die aus mindestens einer der folgenden Familien ausgewählt ist: Biozide, Anti-Moos, Anti-Blitzrost, Dispergiermittel und Wachse;
a.7. einen pH-Regulator, der aus den Säuerungsmitteln ausgewählt ist, vorzugsweise aus der Gruppe umfassend - oder besser noch bestehend aus - : Aluminiumsulfat, Zitronensäure, Weinsäure und deren Mischungen; wobei Aluminiumsulfat bevorzugt ist, oder ausgewählt aus der Gruppe der Alkalinisierungsmittel, vorzugsweise ausgewählt aus der Gruppe umfassend - oder besser noch bestehend aus - :
Stickstoffbasen, Phosphaten, Pyrophosphaten und deren Mischungen, vorzugsweise aus der Untergruppe, umfassend - oder besser noch bestehend aus - : Aminobasen,
Pyrophophaten und deren Mischungen; und noch stärker bevorzugt aus Aminobasen und deren Gemischen; wobei 2-Amino-2-methyl-1-propanol (AMP) privilegiert ist,
wobei die Konzentration von a.7 in A derart ist, dass der pH-Wert von Teil A unterhalb der Abbindeschwelle von Teil A liegt;
a.8. und Wasser;
B - Komponente B umfasst:
b.1. eine Base
- gleich oder verschieden von dem pH-Regulator a.7;
- und ausgewählt aus der Gruppe umfassend - vorzugsweise bestehend aus - Stickstoffbasen, Phosphaten, Pyrophosphaten und deren Mischungen; vorzugsweise aus der Untergruppe umfassend - vorzugsweise bestehend aus
- Aminobasen, Pyrophosphaten und deren Mischungen; und noch bevorzugter aus Aminobasen und deren Mischungen; wobei 2-Amino-2-methyl-1-propanol (AMP) privilegiert ist;
wobei diese Base b.1 in Teil B in einer Konzentration vorliegt, die es ermöglicht, einen endgültigen pH-Wert zu erreichen, der größer oder gleich der Abbindeschwelle von Komponente A ist;
b.2. einen Abbinderegulator/-beschleuniger, ausgewählt aus der Gruppe umfassend Alkali- und/oder Erdalkaliverbindungen wie Oxide, Hydroxide, Carbonate, Sulfate und deren Mischungen, oder besser noch bestehend aus Lithiumhydroxid, Lithiumcarbonat und/oder Lithiumsulfat;
wobei die Base b.1 in Kombination mit dem Abbinderegulator/-beschleuniger b.2 geeignet ist, den pH-Wert der Mischung AB auf einen Wert V zu bringen, der größer als oder gleich 9, vorzugsweise größer als oder gleich 10 ist;
b.3. Wasser und;
b.4. gegebenenfalls ein Verdickungsmittel.

2. Putz nach Anspruch 1, **dadurch gekennzeichnet, dass** sowohl die Komponente A als auch die Komponente B weder als GHS05 korrosiv noch als GHS07 reizend zu kennzeichnen sind, gemäß dem global harmonisierten System zur Klassifizierung und Etikettierung von Chemikalien (abgekürzt "global harmonisiertes System", GHS; auf Englisch: *Globally Harmonised System of Classification and Labelling of Chemicals, GHS*)

3. Putz nach Anspruch 1 oder 2, **dadurch gekennzeichnet, dass** das Trockenmassenverhältnis [(a.1) : (a.2)] im Bereich von [1:3] bis [1:0,5] variiert und dass der Trockenmassenanteil von (a.2) an der Gesamtmischung kleiner oder gleich 6 % ist.

4. Putz nach einem der vorhergehenden Ansprüche, **dadurch gekennzeichnet, dass** er den nicht-rheologischen Zusatzstoff a.6 umfasst.

5. Putz nach einem der vorhergehenden Ansprüche, **dadurch gekennzeichnet, dass** er die folgende Zusammensetzung in Massenprozent aufweist:
Für Komponente A:
| | | |
|---|---|---|
| a.1. | trockenes organisches Bindemittel | [1,0 - 10,0] |
| a.2. | trockenes mineralisches Bindemittel | [1,0 - 10,0] |
| a.3. | Abbindeblocker | [0,01 - 0,5] |
| a.4. | mineralische Füllstoffe | [55,0 - 66,0] |
| a.5. | rheologischer Zusatzstoff | [1,0 - 3] |
| a.6. | nicht-rheologischer Zusatzstoff | [2,0 - 3,0] |
| a.7. | pH-Regulator | [0,01 -0,05] |
| a.8. | Wasser | [20 - 25] |
Für Komponente B:
| | | |
|---|---|---|
| b.1. | Basis | [8,0- 12,0] |
| b.2. | Abbinderegulator/-beschleuniger | [18 - 22] |
| b.3. | Wasser | [65 - 75] |
| b.4. | Verdickungsmittel | [0,3 - 0,6]. |

6. Putz nach mindestens einem der vorhergehenden Ansprüche, **dadurch gekennzeichnet, dass** das organische Bindemittel a.1 ausgewählt ist aus der Gruppe umfassend - oder besser noch bestehend aus - : Copolymere von Vinylacetat/Ethylen, Vinylester von Versatic-Säure, Styrol/Acryl/Acryl, Alkydharze und/oder deren Mischungen, vorzugsweise in Form einer Emulsion.

7. Putz nach mindestens einem der vorhergehenden Ansprüche, **dadurch gekennzeichnet, dass** der Putz ausgewählt ist aus der Gruppe umfassend: Anstrichputz zur Vorbereitung von Untergründen, Fugenputz für Gipskartonplatten oder Mauerwerksputz/Spachtelmasse für den Innenbereich.

8. Verfahren zum Auftragen des Putzes nach mindestens einem der Ansprüche 1 bis 7 auf einen Untergrund, vorzugsweise eine Innenfläche eines Gebäudes, umfassend die folgenden Schritte:
i - Mischen der Komponente A mit der Komponente B,
ii - Auftragen des erhaltenen Putzes vorzugsweise durch Spritzen/Sprühen und/oder Taloschieren.

## Claims

1. A paste internal plastering comprising an at least bicomponent system comprising a component A and a component B, wherein:
A-the component A includes:
a. 1. an organic binder;
a.2. a mineral binder comprising an aluminous cement and/or a calcic sulfoaluminous cement;
a.3. a setting blocker selected from the group comprising-or better still consisting of-: boric acid, tartaric acid, citric acid, salts and/or derivatives thereof, metaphosphoric acid, phosphorous acid, phosphoric acid, phosphonic acid and any compound likely to form any of these compounds by reaction with water, and/or mixtures thereof;
a.4. mineral fillers selected from the group comprising-or better still consisting of-:
• non-lightening fillers, preferably selected from the sub-group comprising- or better still consisting of-: calcium carbonate, quartz, silicates, titanium dioxide, dolomite, and mixtures thereof;
• lightening fillers, preferably selected from the sub-group comprising- or better still consisting of-: cenospheres of aluminium silicates, water-repellent treated expanded perlites, glass beads, and mixtures thereof.
and mixtures thereof;
a.5. a rheological additive comprising at least one compound selected from at least one of the following families: clays, cellulose ethers, synthetic thickeners, xanthans, cellulose fibres, modified starch derivatives, and polyvinyl alcohol;
a.6. optionally a non-rheological additive comprising at least one compound selected from at least one of the following families: biocides, anti-foaming agents, anti-flash-rusts, dispersants, and waxes;
a.7. a pH regulator selected from acidifying products, preferably from the group comprising-or better still consisting of-: aluminium sulphate, citric acid, tartaric acid and mixtures thereof; aluminium sulphate being preferred or selected from alkalinising products, preferably from the group comprising-preferably consisting of-nitrogen bases, phosphates, pyrophosphates and mixtures thereof; preferably the sub-group comprising-preferably consisting of-amino bases, pryophosphates and a mixture thereof; and, still more preferably, from amino bases and mixtures thereof; 2-amino-2-methyl-1-propanol (AMP) being favoured;
the concentration of a.7 in A, being such that the pH of part A is less than the setting threshold of part A;
a8. and water;
B-the compound B incudes:
b.1. a base
▪ identical to or different from the pH regulator a.7;
▪ and selected from the group comprising-preferably consisting of-nitrogen bases, phosphates, pyrophosphates and mixtures thereof; preferably from the sub-group comprising-preferably consisting of-amino bases, pyrophosphates and mixtures thereof; and, still more preferably, from amino bases and mixtures thereof; 2-amino-2-methyl-1-propanol (AMP) being favoured;
this base b. 1 being present in part B at a concentration enabling a final pH value greater than or equal to the setting threshold of compound A to be reached;
b.2. a setting regulator/accelerator selected from the group comprising alkali and/or alkaline earth compounds such as oxides, hydroxides, carbonates, sulphates and mixtures thereof, or better still consisting of lithium hydroxide, lithium carbonate and/or lithium sulphate;
the base b. 1, combined with the setting regulator/accelerator b.2, being capable of bringing the pH of the mixture AB to a value V, which is greater than or equal to 9, preferably greater than or equal to 10;
b.3 water, and;
b.4. optionally, a thickening agent.

2. The plastering according to claim 1, **characterised in that** neither the compound A, nor the compound B, can be labelled as being corrosive SGH05, nor irritating SGH07 in accordance to the *globally harmonised system (GHS) of classification and labelling of chemicals.*

3. The plastering according to claim 1 or 2, **characterised in that** the dry mass ratio [(a. 1):(a.2)] ranges from [1:3] to [1:0.5] and **in that** the dry mass percent of (a.2) based on the total mixture is less than or equal to 6%.

4. The plastering according to at least one of the preceding claims, **characterised in that** it comprises the non-rheological additive a.6.

5. The plastering according to one of the preceding claims, **characterised in that** it has the following composition, in mass percent:
For the compound A:
| | | |
|---|---|---|
| a.1. | dry organic binder | [1.0-10.0] |
| a.2. | dry mineral binder | [1.0-10.0] |
| a.3. | setting blocker | [0.01-0.5] |
| a.4. | mineral fillers | [55.0-66.0] |
| a.5. | rheological additive | [1.0-3] |
| a.6. | non-rheological additive | [2.0-3.0] |
| a.7. | pH regulator | [0.01-0.05] |
| a.8. | water | [20-25] |
For the compound B:
| | | |
|---|---|---|
| b.1. | base | [8.0-12.0] |
| b.2. | setting regulator/accelerator | [18-22] |
| b.3. | water | [65-75] |
| b.4. | thickener | [0.3-0.6]. |

6. The plastering according to at least one of the preceding claims, **characterised in that** the organic binder a.1 is selected from the group comprising-or better still consisting of-: vinyl acetate/ethylene, versatic acid vinyl ester, styrene/acrylic/acrylic copolymers, alkyd resins and/or mixtures thereof, preferably as emulsion.

7. The plastering according to at least one of the preceding claims, **characterised in that** the plastering is selected from the group comprising: paint plastering for preparing supports, jointing plastering for plaster boards, or masonry/patching plastering for the interior.

8. A method for applying to a support, preferably an interior building surface, the plastering according to at least one of claims 1 to 7, comprising the steps of:
i-mixing the compound A with the compound B,
ii-applying the plastering obtained preferably by projection/spraying and/or floating.
